# EUROPEAN PATENT APPLICATION

(11) **EP 0 693 856 A2**
(43) Date of publication of application: **24.01.1996**
(21) Application number: 95201991.7
(22) Date of filing: 19.07.1995
(51) Int. Cl.: H04N 7/24

(54) **System and method to supply multimedial distributive and interactive audio and video services to residential users**

(30) Priority: 22.07.1994 IT MI941552
(71) Applicant: ITALTEL SOCIETA ITALIANA TELECOMUNICAZIONI s.p.a., I-20149 Milano (IT)
(72) Inventor: Morganti, Michele, I-20133 Milan (IT); Gallassi, Giorgio, I-20010 Cornaredo (MI) (IT); Toniatti, Tiziana, I-20053 Muggio' (MI) (IT)
(74) Representative: Giustini, Delio

(57) **Abstract**

The local node of the ATM type implemented according to the invention includes:
- a switching network (ATM_SF) consisting of a first portion of the point-to-point type (PTP_S) suitable to manage interactive services and of a second portion of the multicasting type (MC_S) suitable to manage distribution services;
- one user peripheral module at least (PMU) suitable to connect the Customer Premises Network (CPN) to said switching network (ATM_SF);
- one peripheral module at least for the management of interactive services (PMS_{I}) suitable to connect devices supplying audio and video interactive services (AUDIO VIDEO SERVER_{I}) to said switching network (ATM_SF);
- one peripheral module at least for the management of distribution services (PMS_{D}) suitable to connect devices supplying distribution services (AUDIO VIDEO SERVER_{D)} to said switching network (ATM_SF).

## Description

### Field of the Invention

The present invention relates in general to systems for the supply of audio and video digital services through networks employing the digital technique called fast switching cells or ATM (Asynchronous Transfer Mode).

More in particular the invention relates to an equipment and a method for the fast management of connections for distribution and interactive video services in local node according to ATM technique for residential users.

The problem of the distribution of audio and video digital services through switching networks has an ever higher up-to-dateness and importance, mainly considering the present well known limits of the analog audio and video diffusion by ether or by cable on one side and the quick evolution of technologies in the communication field on the other side.

In fact, the methods for the processing of video signals (coding, compression, storing in the digital form), high performances in terms of capacity, flexibility, effectiveness and reliability given by the ATM technique for the switching networks, and finally the new digital techniques of the DSL type (Digital Subscriber Line) with which it is possible to transmit capacities of a few MBit/s on the user's loop, enable to develop telecommunication systems to supply audio and video services to residential users.

In particular the above mentioned telecommunication systems, allow each user to have an actual bi-directional connection with the servers of audio and video services, enable the interactive fruition of digital services such as Audio-Video On Demand, Teleshopping, Telemarketing, Teleeducation, etc.

At the same time, these telecommunication systems are able to allow users to utilize digital audio and video services of the distributive type, such as TV Broadcast, etc.

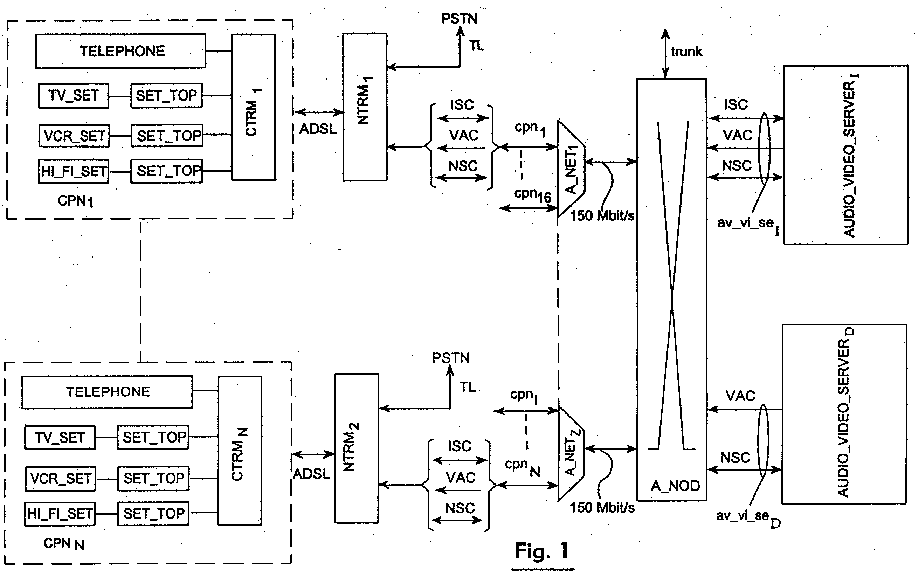

An outline of a possible structure of a network for the supply of digital audio and video services is shown in Fig. 1, where the supply of new services integrates with the traditional ones, such as the telephone service.

Making reference to Fig. 1, some networks or Customer Premises Networks CPN₁,...,CPN_{N} are connected to the telephone network PSTN (Public Switch Telephone Network) as well as servers of interactive services (AUDIO_VIDEO _SERVER_{I}) and servers of distribution services, (AUDIO_ VIDEO_SERVER_{D}) directly abutted to the local node according to the ATM A_NOD (ATM_NODe) technique or through the ATM backbone network.

Each CPN user network includes a plurality of user equipment, such as tv-sets TV-SETS, video recorders VCR-SET, high fidelity audio equipment HI-FI-SET.

Other equipment, such as telephone equipment, fax, personal computers, etc. can be included in the CPN.

The above mentioned user equipment are abutted to connection units SET-TOP performing all the conversion functions necessary to adapt signals transported by the node A_NOD in signals compatible with the different equipment of the CPN network.

Connection units SET-TOP perform also all the conversion functions necessary to send all control signals generated by the users of equipment connected to the SET-TOP unit towards the local node A_NOD.

The CPN network is connected to the PSTN network and to the ATM network through the ADLS technology channel implemented on twisted pair. The ADSL channel transports both the traditional telephone signal and the information relevant to new audio and video services. As stated hereafter, the ADSL technique allows the transmission uip to 7 Mbit/s information flow from the node A_NOD towards the user network and up to 640 kbit/s in the opposite direction.

In each user network, multiplexing (and demultiplexing) of flows coming (and destined to) the telephone equipment TELEPHONE and from the SET TOP unit is made by the user termination unit CTRM (Customer TeRMination).

Dually side node A_NOD, the CTRM unit is connected to a known termination NTRM (Node TeRMination) routing the flows of the traditional services (telephone, fax) coming from the CPN towards the PSTN network, and the flows of connections of distributive and interactive multimedia services towards the ATM network. In the opposite direction, the same NTRM units routes the flows coming from two service (distributive and interactive) providers towards the CPN network.

Said NTRM terminations are connected to the node A_NOD through access networks A_NET (Access NETwork). A_NET networks can be local or remote with respect to the local node A_NOD and provide to multiplex/demultiplex a plurality of information flows having for instance 6 Mbit/s speed and to create an information flow, showing for instance 150 Mbit/s speed to supply a high effectiveness to the accesses of the local node A_NOD.

In a first approximation the local node A_NOD supplies at least three typologies of communication channels among the user's networks CPN and servers AUDIO_VIDEO_SERVER_{I} and AUDIO_VIDEO_SERVER_{D}.

The first one of these channels, indicated with VAC (Video Audio Channel) is monodirectional and transports audio and video signals from AUDIO_VIDEO_SERVER_{I} and AUDIO_VIDEO_SERVER_{D} to the CPN networks.

The second one of these channels, indicated with NSC (Network Signaling Channel) is bi-directional and transports the network service information.

Finally, the third channel, marked ISC (In Service Channel) is bidirectional and transports all the signaling and control information exchanged between AUDIO_VIDEO _SERVER_{I} and CPN user's networks.

In the case of distribution services audio and video data coming from AUDIO_VIDEO_SERVER_{D} are sent (distributed) by the local node in the same way towards all the users.

In the case of interactive services each user is on the contrary considered as a separate unit by service servers AUDIO_VIDEO_SERVER_{I}.

In this case the local node reserves an identified set of connections between the AUDIO_VIDEO_SERVER_{I} and a predetermined user.

The number of channels each user's network CPN can utilize, depends on the capacity (in terms of passwidth) of the connection channel.

At present, in the major part of cases, user's networks CPN are connected to local nodes ATM A_NOD (generally based on optic fiber technologies) through connections based on simple twisted pairs.

Thanks to technologies of the DSL type (Digital Subscriber Line) it is possible to reach a transmission speed of some MBit/s on the twisted pairs.

In particular with ADSL technologies (Asymmetrical DSL) it is possible to transmit an asymmetrical flow up to 7 Mbit/s from telephone exchange to user and up to 640 kbit/s in the opposite direction.

With the VDSL technologies (Very high bit rate DSL) it is even possible to reach 15 Mbit/s from telephone exchange to user.

Thanks to the adoption of these DSL technique it is also possible to transmit signals having very high bit rate such as digital video signals on the conventional twisted pair distribution network.

In fact, as it is well known the bit rate of the present television standards varies between values of 1.5 Mbit/s (VHS) to 5 Mbit/s (study PAL) up to reach 20 Mbit/s values (High Definition).

In both the types of service, distributive or interactive, the information traffic passing through the local node A_NOD is much higher in the direction going from service distributors AUDIO_VIDEO_SERVER_{I} and AUDIO_VIDEO_SERVER_{D} to user's networks CPN in comparison to the direction from users to service distributors.

In fact, while service distributors transmit high speed signals towards the users on the VAC channel (audio and high fidelity and full motion video), users transmit to servers only short control signals on ISC and NSC channels (e.g. selection of channels, commands for the quick forward or rewind of films or musical excerpts transmitted on request, etc.).

Typically the speed of signals crossing the downstream side is in the range of 7 Mbit/s, while the speed of signals crossing the upstream side is in the range of 640 kbit/s.

Since the supply of digital audio video services requires the control of data flows characterized by different bandwidths (some kbit/s up to some Mbit/s) and with stringent requirements as for transfer delay and error possibility, the ATM technique seems at present the most adequate for the realization of the local node A_NOD.

In fact, as it is already known, the ATM technique has an ever increasing importance since it enables to control the multiplexing and the integrated switching of digital signals flows belonging to the services for the transmission of vocal, video and data signals, with different bandwidth requirements and different traffic characteristics.

In particular, the ATM techniques foresees that information relevant to the different services be organized in information units with 424 bit fixed length, called cells. These cells contain, in addition to payload, a header carrying the information necessary to the routing of the cell itself through the geographical network.

The fact that the cells contain the information required to define the path to make to reach their destination, involves several advantages in terms of effectiveness and elasticity.

Therefore, thanks to these and other characteristics, communication networks based on the ATM technique are particularly suitable to act as support to the new broad band services and in particular to audio and video digital services.

However, the use of ATM networks requires the solution of some problems to offer an effective and integrated control of distributive video services (TV Broadcast) and interactive services (Video On Demand).

A first problem is due to the fact that the transmission of audio and video channels in broadcast mode, necessarily requires that the ATM connection network offers the possibility to replicate and re-address cells belonging to a predetermined channel towards all interested users.

For the ATM switching network, the replication of the cell and re-addressing operation requires the creation of a multiplicity of cells copies with the same payload by a single original cell, but with different routing information (header) for any cell.

Though these replication and re-routing functions can be certainly made inside an ATM network, their execution should heavily engage both the node resources and the control resources related to the same.

This will make the management of distribution services and the simultaneous management of interactive services very expensive.

A second problem arising in the management of users requests is related to the so-called zapping phenomenon, that is the phenomenon of frequent requests of channel change by the users enjoying an audio and video service of the distributive type.

This phenomenon, while being banal, has some characteristics capable to quickly put the control system of a conventional ATM network in overload conditions.

In fact, the zapping phenomenon, besides being very frequent, also shows high peaks in relation to the transmission of programs of special interest.

The simultaneous change of a channel of a great number of users forces the control structures of the ATM switching network to heavy check operations if the bandwidth of the required channel is compatible with the bandwidth available at the user's network.

These control function, considering amount and correlation of signals involved, can slow down the channel change operation in a manner unacceptable to the user.

In fact, since a CPN user's network generally allows the simultaneous presence of a plurality of VAC channels, serious problems can arise due to the limitation of the bit rate available a whole at the CTRM user's socket.

Assuming for instance that the bit rate available at a CPM network is 6 Mbit/s and a low resolution (1.5 Mbit/s) tv broadcast channel is active, it should not be possible to meet the request of an additional television broadcasting having high resolution (5 Mbit/s).

This limitation on the bit rate actually available at the CTRM user's socket involves additional complex check operations by the control structures of the ATM switching network.

In summary, though an ATM network is structurally adequate to support the transport of audio and video digital services of the distributive and interactive type, considerable problems arise for the control of traffic requiring heavy expansion interventions of the connection network and mainly of the control structure, to be solved.

### Object of the Invention

It is one object of this invention to supply a system for the control of connections in an ATM local node enabling to control both the supply of audio and video distributive digital services and audio and video interactive digital services at the same time in a simple and effective manner.

It is one additional object of this invention to supply a method enabling to supply effective audio and video distributive digital service, even in presence of many and simultaneous requests for channel change ("zapping") by the users.

### Disclosure of the Invention

According to the above the invention relates to a system for the control of connections for audio and video distributive and interactive services in a local node, in the ATM technique including:
- a local node in the ATM technique;
- a plurality of customer premises network, connected to said local node;
- audio and video servers of the interactive type connected to said local node;
- audio and video servers of the distributive type connected to said local node;
- a control and supervision network,
   characterized by the fact that said local node includes:
- a switching network consisting of a first portion of the point-to-point type suitable to switch the ATM cells belonging to interactive services and of a second multicasting portion suitable to distribute ATM cells belonging to distributive services;
- at least one user's peripheral module, suitable to connect customer premises networks to said switching network;
- at least one user's peripheral module, for the control of interactive services suitable to connect said audio and video interactive servers to said first portion of the switching network;
- at least one user's peripheral module, for the control of distributive services suitable to connect said audio and video distributive servers to said second portion of the switching network.

The invention relates also to a method for the control of connections for distributive and interactive audio and video services in a local node in the ATM technique, including:
- a local node in the ATM technique;
- a plurality of customer premises networks, connected to said local node;
- audio and video servers of the interactive type connected to said local node;
- audio and video servers of the distributive type connected to said local node;
- a control and supervision network, characterized by the fact to include the following steps:
- to distribute ATM cells available at the output of said distributive servers and relevant to distributive services with replication of signals at physical level and to send the replicated signals to user peripheral modules;
- to repeat and switch, inside said user peripheral modules, said ATM signals and send repeated cells towards said customer premises networks,
   further characterized by the fact to include the following additional steps:
- to switch ATM cells available at the outputs of said audio and video interactive servers and relevant to audio and video interactive services with a switching at ATM level of signals and send switched signals to user peripheral modules;
- to switch inside said user peripheral modules said ATM signals and address switched signals towards said customer premises networks.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings and in which:
Fig. 1, already described, shows the general structure of a communication network for the supply of audio and video digital services;
Fig. 2 shows a block diagram of the ATM node A_NOD of Fig. 1 implemented according to the invention, for the distribution of audio and video services;
Fig. 3 shows more in detail the portions of the node A_NOD of Fig. 2 concerned in carrying audio and video interactive services;
Fig. 4 shows more in detail the portions of the local node A_NOD of Fig. 2 concerned in carrying audio and video distributive services;
Fig. 5 shows an embodiment of the PTP_S unit of the ATM_SF complex of Fig. 2;
Fig. 6 shows an embodiment of the MC_S unit of the ATM_SF complex of Fig. 2;
Fig. 7 shows more in detail the structure of a peripheral module PMU of the node A_NOD of Fig. 2, for the interface of user's networks;
Fig. 8 shows more in detail the structure of an ATLD unit in Fig. 7.

### Detailed Descritpion of a Preferred Embodiment

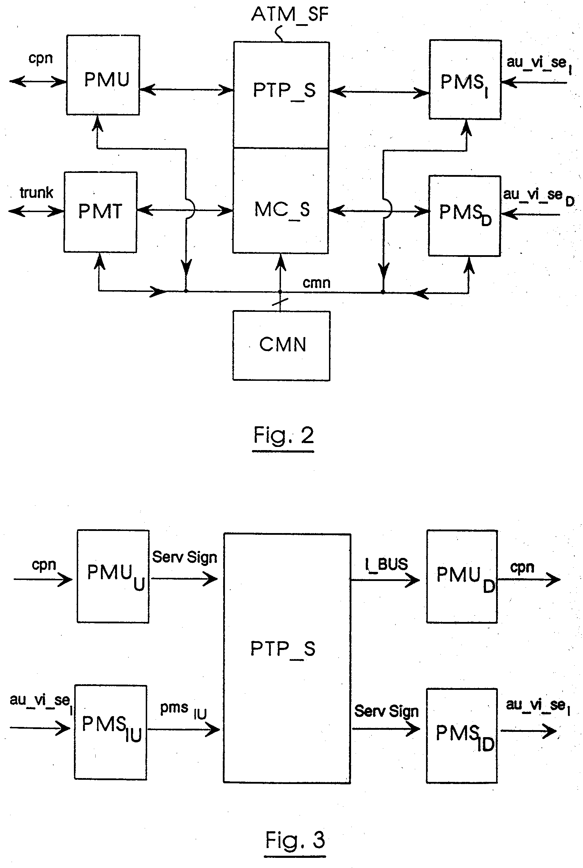

A general outline of a possible structure of a local node for the distribution of audio and video services based on an ATM switching network is shown in Fig. 2 and essentially includes:
- a switching network ATM, identified with ATM-SF (ATM Switching Fabric);
- a network for the control and supervision of the local node, identified with CMN (Control Message Network) controlling all the node units through connections globally identified cmn;
- one or more peripheral modules PMS_{I} performing interface functions with audio and video interactive server devices (not shown) through connections au_vi_se_{I};
- one or more peripheral modules PMS_{D} performing interface functions with audio and video distributive server devices (not shown) through connections au_vi_se_{D};
- one or more peripheral modules PMU performing interface functions with audio and video distributive and interactive utilization devices (not shown) through connections globally identified cpn;
- one or more peripheral modules PMT performing interface functions with other nodes, not shown, of the ATM network through the connection labeled "trunk".

Always making reference to the attached Fig. 2, it is possible to notice that the ATM-SF network includes at its inside two separate portions, identified PTP_S (Point To Point Structure) and MC_S (Multicasting Structure), respectively.

The PTI_S portion is concerned in all the services having essentially interactive nature, while the MC_S portion is concerned in the services having essentially distributive nature.

The functional diagram of Fig. 3 shows more in detail the portions of the local node concerned in carrying audio and video interactive services.

Making reference to Fig. 3 the portion of the peripheral module PMS_{IU} receiving data from server devices of audio and video interactive services and transmitting the same towards the network PTP_S (upstream flow) has been globally identified PMS_{IU}.

The portion of the PMS_{I} peripheral module receiving data from the PTP_S network and transmitting them towards the servers of audio and video interactive services (downstream flow) has been globally identified PMS_{ID}.

Always referring to Fig. 3 it was globally identified by PMU_{U} the portion of the peripheral module PMU receiving data from the different user networks CPN and transmitting the same towards the PTP_S network (upstream flow).

The portion of the PMU peripheral module receiving data from the PTP_S network and transmitting them towards the different user networks CPN (downstream flow) has been globally identified PMU_{D}.

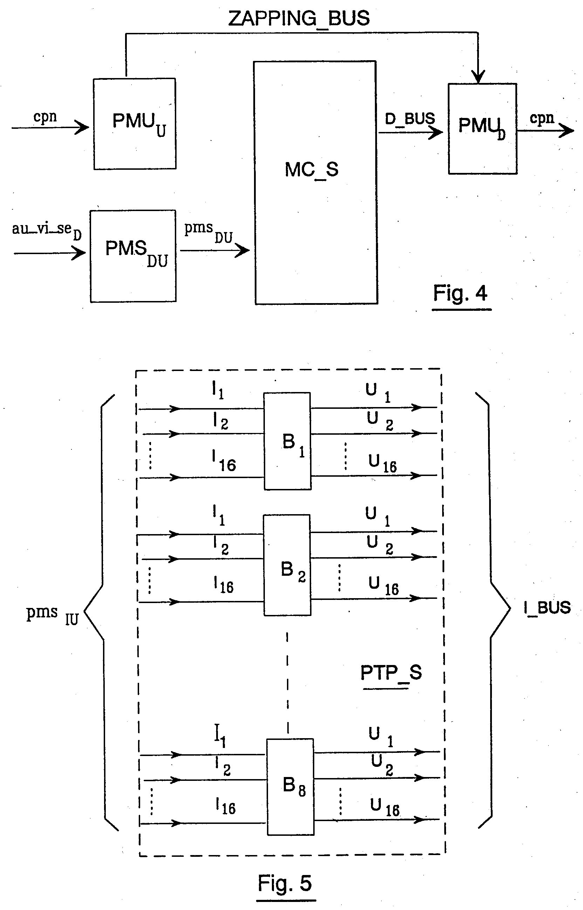

The functional diagram of Fig. 4 shows more in detail the portions of the local node concerned in carrying distributive audio and video services.

Making reference to Fig. 4 it was globally identified by PMS_{DU} the portion of the peripheral module PMS_{D} receiving data from audio and video distributive services through the au_vi_se_{D} and transmitting the same towards the MC_S network (upstream flow).

According to the invention, the MC_S network is a passive optical network having essentially tree structure. Inside the MC_S network, ATM cells transmitted on a sole physical link by the PMS_{DU} module are distributed through physical splitting of signals (optical splitters) towards all PMU user's peripheral modules.

Always referring to Fig. 4 it was globally identified by PMU_{U} the portion of the peripheral module PMU receiving requests of channel change from each single user from the different CPN user networks.

In both the functional diagrams of Figures 3 and 4 the portions of the peripheral module PMU concerned in the upstream data flow, have been identified PMU_{U}.

All the requests coming from the user networks CPN abutted to a single peripheral module PMU_{U} are controlled inside the PMU_{U} module itself (Fig. 4).

According to the invention, the PMU_{U} portion of the PMU peripheral module takes care of the upstream flow of data concerning both interactive services and distributive ones (Figures 3 and 4).

The portion of the peripheral module PMU receiving data from the MC_S network and transmitting the same towards the different user networks CPN (downstream flow) has been globally identified PMU_{D} (Fig. 4).

In both the functional diagrams of Figures 3 and 4 the portions of the peripheral module PMU concerned in the upstream data flow, have been identified PMU_{U}.

Thanks to the characteristics of the MC_S network, the same flow of ATM cells coming out from the PMS_{DU} reaches all the modules PMU_{D} (Fig. 4).

According to the invention, the PMU_{D} portion of the PMU peripheral module takes care of the downstream flow of data concerning both interactive services and distributive ones.

Profitably, each one of the PMU modules includes ATM cell switching and replication functions. These functions, even if limited, are anyhow sufficient to control the switching and splitting of ATM cell flows towards the users abutted to the single PMU module.

The advantages of the invention are evident.

Through such an architecture, the characteristics of the ATM technique are fully exploited with great effectiveness.

For interactive services, in which it is necessary to establish a true link between the users and server devices, the PTP_S portion of the ATM-SF network, creates virtual connections of the point-to-point type maintaining all the effectiveness advantages of the ATM technique.

On the contrary, for distributive services, the MC_S portion of the ATM-SF network creates a simple and low cost distribution of signals at physical level, transferring to PMU peripheral modules the switching control functions on the basis of users' requests.

Being the signals carried by the MC_S network as ATM cells, the switching control functions performed by PMU peripheral modules can be made with ATM techniques.

Due to the fact that peripheral modules PMU take care both of data flows concerning interactive services, and data flows concerning distributive services, it is possible to avoid useless duplications of devices to the profit of effectiveness and simplicity of the equipment.

Thanks to the fact that, usually said peripheral modules PMU serve a limited number of users (generally not more than 4000), the switching control functions can be performed more effectively than the similar functions performed in centralized way.

Figure 5 shows a preferential example of the implementation of the first portion point to point-switching PTP_S of the ATM Switching Fabric ATM_SF of figure 2.

This unit includes a plurality of switching elementary units B1,..., B8, having 16 inputs I1,...,I16 and having 16 outputs U1,...,U16 of the type described in the patent application no. 68059 A/89 deposited on November 30, 1989, in the name of the Applicant itself, where it is described a switching element for a connection network in a cell quick switching node (ATM) using a memory of the shared type (shared), addressable through the content, in which a fraction of the routing label is stored together with a code indicating cells arrival time sequence. This device shows considerable advantages in the construction of an ATM connection network.

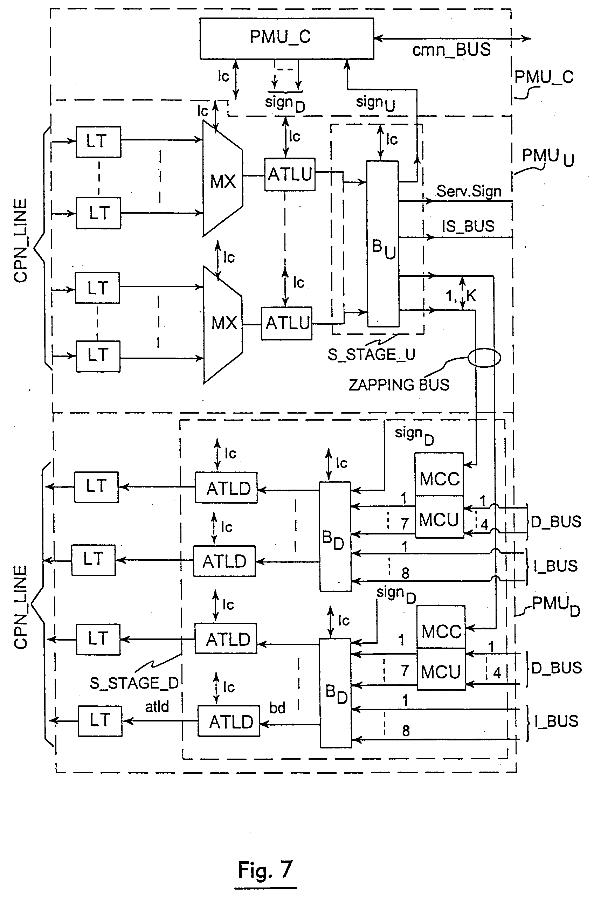

Units B receive at input the pms_{IU} outputs of the peripheral module for the management of interactive services PMS_{IU} upstream side (see Fig. 3) and, after having performed the switching operations, send the switched cells to the bus I_BUS of the user peripheral module PMU_{D} as it shall result more clear hereafter making reference to figure 7.

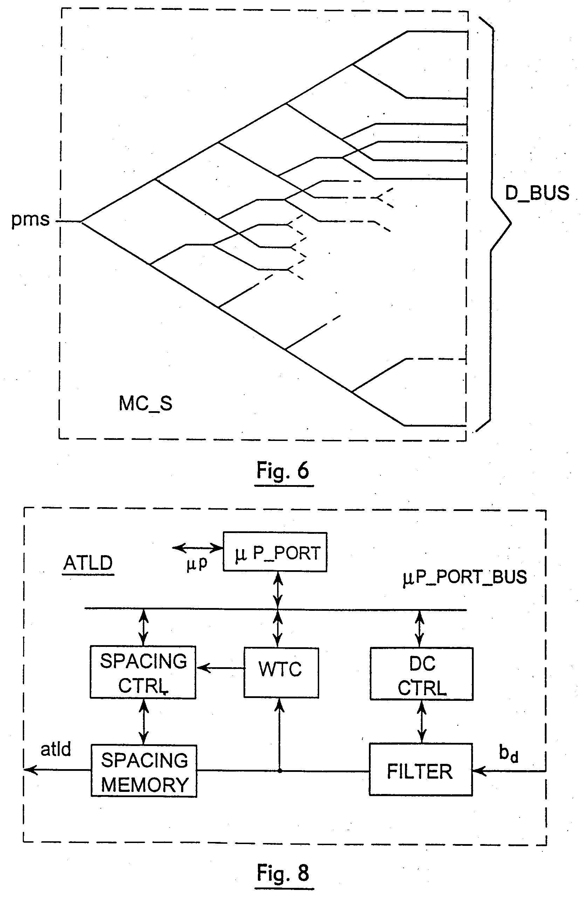

Figure 6 shows a preferential embodiment for the implementation of the second portion MultiCast-Switching of the ATM Switching Fabric of Fig. 2.

This portion is preferably formed by a passive optical network, that is by a combination of optic fiber lengths (or guides) and by optical splitters each one of which receives at input a length of optic fiber (or guide) and also the optical signal received on two lengths of fiber (or guide) abutted at its output. In this way a tree network is performed allowing to distribute on a very high number of outputs D_BUS (better described hereafter making reference to Fig. 7) signals coming from the peripheral module for the management of distribution services PMS_{D} through the pms_{DU} connection.

Making reference to the attached Fig. 7 the structure of a PMU peripheral module shall be described more in detail.

According to what indicated in the functional diagrams of Figures 3 and 4, the peripheral module PMU consists of a first section PMU_{D} , taking care of data flows addressed by the ATM network towards users' networks CPN (downstream) and of a second PMU_{U} section of data flows addressed by users' networks CPN towards the ATM network (upstream).

The two sections PMU_{U} and PMU_{D} are connected to a control unit PMU_C.

The control unit PMU_C is connected, through a bus cmn_BUS, to the CMN network controlling and supervising the local node (see Fig. 2).

On the bus cmn_BUS transit all the control signals exchanged, through the NSC channel, by the PMU unit with the control network CMN.

As far as the downstream data flow is concerned, the PMU_{D} section of the peripheral module PMU includes a switching stage S_STAGE_D whose inputs are connected, through two buses D_BUS and I_BUS, to the MC_S network and to the PTP_S network respectively (see Fig. 5 and 6).

On the bus D_BUS transit all data relevant to audio and video distributive services sent, through the VAC channel, by the MC_S network towards the PMU unit.

On the I_BUS bus transit all the data relevant to audio and video interactive services sent, through the VAC channel, by the PTP_S network towards the PMU unit.

Each output of the switching stage S_STAGE_D is connected, through a relevant connection unit ATLD (ATM Layer Downstream), to a respective line termination LT.

Each line termination LT is directly connected, through a respective connection line CPN_LINE, to the CTRM socket of a respective user network CPN, through said access network A_NET and said network termination NTRM.

Each unit represented in figure 7 and more particularly units MC, ATLU, BASE (B), MCC and ATLD communicate through a bus LOCAL_CONTROL, indicated in figure with Ic, with the control unit PMU_C.

The switching stage S_STAGE_D includes a given number of 16 inputs, 16 outputs switching elements marked B, previously mentioned referring to Fig. 5.

This switching element shows in fact also considerable advantages in the construction of switching stages of the PMU unit according to the present invention.

Structural and operation characteristics of this switching element are described in the above mentioned patent application, reference to which shall be made for additional clarification and details.

In the embodiment shown in Fig. 7, the first input of each one of the switching elements B of the stage S_STAGE_D is connected to the control unit PMU_C through the connection sign_{D}.

The remaining seven inputs of each switching element B of the stage S_STAGE_D are connected to the 7 outputs of relevant cell multicast units MCU having 4 inputs and 7 outputs.

The cell multicast units MCU repeat on their outputs the cells arriving at their inputs.

The four inputs of the cell multicast units MCU are directly connected to the bus D_BUS of the MC_S network.

The cell multicast units MCU are connected to respective control units MCC.

The remaining eight inputs of the switching elements B of the stage S_STAGE_D are directly connected to the bus I_BUS of the PTP_S network as described above referring to Fig. 5.

As far as the upstream data flow is concerned, the PMU_{U} portion of the peripheral module PMU is connected it too, through line terminations LT, to lines CPN_LINE.

All signals transmitted by the user networks CPN directed toward the PMU peripheral module transit on CPN_LINE lines. Th upstream portion PMU_{U} of the peripheral module PMU includes connection units ATLU (ATM layer upstream) with inputs connected to line terminations LT.

Each connection unit ATLU is connected, through multiplexing units MX to a high number of line terminations LT.

The outputs of the connection units ATLU are connected to the inputs of a switching stage S_STAGE_U.

The switching stage S_STAGE_U includes a unique switching element B_{U} having 16 inputs and 16 outputs.

This evident asymmetry in the number of switching elements employed in the two portions PMU_{U} and PMU_{D} of the peripheral module PMU is due to the higher bandwidth of data flows transmitted by the downstream side compared to the upstream one.

Some of the outputs of the switching element B_{U} of the stage S_STAGE_U are connected, through a bus IS_BUS, to the switching network ATM-SF.

On the bus IS_BUS transit all the signals, directed to the ISC channel, relevant to the requests of users abutted to line terminations LT.

An output of the switching element B of the stage S_STAGE_U is also connected, through a connection sign_{U}, to the control unit PMU_C.

According to the invention, some outputs of the switching element B of the stage S_STAGE_U (upstream side) are connected to the control units MCC of the cell multicast units MCU.

Through these connections, identified by ZAPPING_BUS, between the upstream portion PMU_{U} and the downstream portion PMU_{D} of the user peripheral module PMU it shall be possible, as it shall be better described hereafter, to process inside the peripheral module PMU itself the zapping requests of users abutted to line terminations LT.

Always referring to the attached figures a method for the management of the above mentioned zapping phenomenon shall now be described.

When an user abutted to a line termination LT makes a request for channel change, this request is coded in the payload of an ATM cell (zapping cell).

This zapping cell is conveyed, through connection units ATLU towards the switching stage S_STAGE_U of the PMU_{U} unit.

The switching stage S_STAGE_U sends then the zapping cell on the bus ZAPPING_BUS toward control units MCC of the stage S_STAGE_D corresponding to the user who made the request.

Following the reception of a zapping cell the control unit MCC commands the MCU unit to stop ATM cells repetition corresponding to the current channel and to start replication of ATM cells corresponding to the channel required by the user.

Furthermore the MCU unit includes a "provisional" signal inside the header of said cells and sets the indicator field of the reject priority at a low priority value.

Advantageously, this "provisional" signal datum is included in the FRM field (Fast Resource Management) of the ATM cell header. The FRM signal can be included in the fields not used by the ATM cell, for instance using the PTI=110 configuration for the standard format cell or using particular configurations of the OCI field (Output Connection Identifier) of the cell format used inside the local node.

ATM cells so marked, are sent by the switching element B of the switching stage S_STAGE_D toward the connection unit ATLD corresponding to the user who made the channel change request.

As noticed before, the user network CPN ordinarily allows the simultaneous presence of multiple VAC connections both of the interactive and of the distributive type.

Interactive connections are of the point-to-point type, and the check of resources allocation is made by the signaling plan at call set-up.

As for connections of the distributive type, no preventive check is made to check the availability of resources in terms of bandwidth, in order to make the execution of a zapping control quick.

This involves that a channel change can generate a non acceptable cell bit rate and could degrade connections underway.

To this purpose assume that the bit rate of the user channel in downstream direction is 6 Mbit/s and that on the CPN network the two VAC connections called A and B are active. Assume also that the A type connection is of the interactive, low resolution type (1.5 Mbit/s) and connections B is of the distributive type with low resolution (1.5 Mbit/s). In this case the bandwidth still available on the CPN is 3 Mbit/s (6Mbit/s-1.5Mbit/s-1.5Mbit/s).

Now consider the case where the user asks, through a zapping command, to pass to the B connection from the low resolution channel transmission (1.5Mbit/s) to the transmission of a higher definition channel transmission (5Mbit/s).

In this case the required bandwidth increment 3.5Mbit/s (5Mbit/s-1.5Mbit/s) is higher than the bandwidth still available to the user (3Mbit/s). This means also that the sum of the bit rate of channels A and B requested (6.5 Mbit/s) is higher than the bandwidth available on the user network (6Mbit/s).

In order to perform both the resource allocation for distributve connections and to assure an adequate service level (GoS) for connections already set up of the distributive and interactive type, a detection mechanism and some mechanisms performing actions suitable to assure the service level are present in ATLD.

The first control mechanism has the task to detect if the bandwidth increase following the request of a different distribution channel is compatible with the bandwidth available on the user network.

This check is made on distributive connections only, and not on interactive connections.

The second type of control mechanisms has the function to assure the service quality of connections already in progress, in particular both for interactive connections to which the resources have been allocated by the signalling plane, and to distributive connections, whose bit rate has been considered compatible with the bandwidth available on the user network of the first type of mechanism.

Referring to mechanisms to evaluate if the bandwidth increment of the distributive connection is compatible with the bandwidth available on the user network, this detection is statistically made using spacing algorithms based on Leaky Bucket and with threshold values.

More in particular, in the ATLD unit, for each CPN, there is a queue called spacing queue. Cells of distributive services only are stored in said queue. In order to optimize the use of resources, the different logical queues employ in a shared manner a common memory area. The depletion rate of cells from buffer to the user network , called also service speed of the spacing memory, depends on the user bandwidth not used by interactive services. In particular, this value is calculated on the basis of the bit rate of the user channel from which the sum of the peak speed of connections relevant to interactive services is subtracted.

Making reference to the previous example, where the user channel has 6 Mbit/s speed and a unique interactive, low resolution (1.5 Mbit/s) connection (A connection), the service speed of the spacer memory is 4.5 Mbit/s.

It is evident that if the bit rate produced by distributive connections is lower than this speed, the queue results essentially discharged and the phenomenon of the queue filling is essentially of the statistical type. While if the bit rate produced by distributive services is higher than the spacer service speed, the number of cells in queue tends to increase and the filling speed is much higher as the bit rate of distributive connections is high compared to the spacing speed.

Always referring to the previous example and assuming that the spacer service speed is 4.5 Mbit/s, assume that the B connection is of the low definition, distributive type (1.5Mbit/s). In this case the spacing queue is "loaded" with a traffic of 1.5 Mbit/s.

If through a zapping signal, a channel having higher definition (for instance 5 Mbit/s) is required on the B connection, once MCC, through MCU, produces the variation of the spacing memory service speed, the spacing queue shall have at input an ATM flow at 5Mbit/s speed.

Since the maximum flow coming out from the spacing is 4.5 Mbit/s, the number of cells in the spacer shall increase at a rate proportional to 0.5 Mbit/s.

The number of cells present in the spacing queue is periodically counted and compared with a threshold value.

Whenever this threshold value is exceeded, the cell flow generated by the distributive sources is considered not compatible with the quantity of resources available to the user. In particular, the bandwidth increment is considered not acceptable.

Whenever the bandwidth increment is not acceptable, mechanisms belonging to the second type of congestion control are enables to assure the service quality of connections already allocated.

Firstly, if the cells queued in the spacing memory exceed the threshold value, the ATLD unit sends a signal on the bus LOCAL_CONTROL Ic to the control unit PMU_C that the bandwidth available at the user's is exceeded and sends also the identifier of the connection which has produced the bandwidth flow.

The information concerning the last connection on which the change of a transmission channel has occurred is deduced in ATLD observing the FRM field of cells. The information relevant to the order of arrival of connections which performed the channel change is stored in an appropriate memory (not shown) called LAST_ZAPPING_RECORD.

Following this signal the control unit PMU_C signals the bandwidth violation, always through the bus LOCAL_CONTROL Ic, to the control unit MCC corresponding to the connection causing the violation.

Following this command, the MCC controls unit commands to the corresponding cell multiplication unit MCU to stop the transmission of ATM cells corresponding to the required channel toward the user.

During the interval between detection of violation of the available bandwidth and the stop of ATM cells transmission, the cell flow generated by MCU producing the bandwidth violation, could damage the service level of connections already set-up and of active ones on the user network, and of those belonging to other user networks sharing the same units upstream the ATLD unit, that is in the switching stage B and in the MCU unit.

To assure the service quality for connections on the same user network, at detection of spacing threshold exceeding in the ATLD unit, besides sending an alarm signal to the PMU_C unit, it immediately enables a cell filtering algorithm and a cell overwriting algorithm (overwriting).

Following enabling of the filtering algorithm (killer) the ATLD unit refuses to store inside the spacing queue the cells belonging to the last connection which requested the channel change.

Furthermore, the ATLD unit overwrites the low priority cells of the last connection requesting the channel change queued in the spacing queue with high priority cells entering the spacing queue itself.

Thanks to enabling of filtering algorithms (killer), the ATLD unit avoids filling of the spacing queue by cells corresponding to the failed connection attempt, immediately eliminating these cells without awaiting that the repetition stage MCU proceeds to stop sending of these cells.

The killer returns in the passive state if after a given interval no additional cells arrive on that connection, or through the arrival of a sequence of cells whose FRM field carries the message of channel change occurred on that connection.

As for connections of other users sharing the same switching unit (S_STAGE_D) or the same repetition unit (MCU), since ATM cells transmitted in the provisional phase are identified with a low priority signal, these cannot degrade the service quality of connections which bandwidth has been evaluated as compatible with resources available and whose header is high priority identified. In fact, in congestion conditions, low priority cells can be rejected by the network to assure high performances of high priority cell loss.

On the contrary, in the case the bandwidth increment is considered acceptable, the ATLD connection unit does not send any signal on the bus LOCAL_CONTROL.

The control unit MCC, when it does not receive any signal from the LOCAL_CONTROL bus and does not receive any further request on the ZAPPING_BUS for channel change, when the time-out counter reaches the zero value, signals to the cell multiplication unit MCU to stop the insertion of the low priority signal inside cells sent.

In this way a passage from a transient connection situation to a "permanent" connection situation is determined.

If the control unit MCC receives an additional zapping request on the bus ZAPPING_BUS, either if the ATM cell transmission is characterized by the provisional phase or if the transmission phase is final, the new zapping request always determines the starting of a provisional phase with sending of a particular sequence in the FRM field, ATM cells identified at low priority and the value of the time out counter set at initial value.

One could appreciate the fact that in this way the control of channel change requests is made inside the peripheral module PMU without involving structures at higher hierarchical level, such as for instance the CMN network for the control and supervision of the local node.

This allows to importantly reduce the architectural complexity of the control CMN network and to considerably simplify the complexity of traffic control algorithms made by the CMN network itself.

One can also appreciate the fact that, since all switching functions are made at ATM protocol level, channel change operations result being immediate even in presence of several and simultaneous requests for channel change by the users.

Overwriting operations of cells marked as "low priority" and the 'killer' filtering mechanism allow to assure an adequate service level both for provisional connections whose bandwidth is compatible with available resources and for final connections.

Fig. 8 shows an embodiment of the ATLD unit of Fig. 7 in which ATM cells relevant both to interactive connections I and to distributive connections D coming from the unit B_{D} are addressed to the corresponding line termination LT through a unit called FILTER and through the spacing memory SPACING MEMORY.

The FILTER unit performs the following functions:
- it detects if on distributive connection the zapping has occurred, observing the coding relevant to the FRM field and if the detection is successful it communicates this event to the control block of distributive connections DC CTRL (Distributive Connection ConTRoL);
- it eliminates the cells of distributive connections if the bandwidth required for that connection is not compatible with the bandwidth available to the user.

The spacing memory stores the cells for a time interval determined by a control unit WTC (Waiting Time Computer). In particular, for interactive type connections the waiting time is null while for distributive type connections the waiting time is evaluated through the leaky bucket algorithm described above.

The number of cells of distributive services addressed toward CPN, standing by in the SPACING MEMORY is counted and compared to a threshold value contained in the spacing queue controller SPACING CTRL. If this value is exceeded, the control unit SPACING CTRL communicates to the DC CTRL unit mentioned above the identifier of the CPN unit which the threshold exceeding refers to.

In response to the receipt of this message, the DC CTRL unit determines the distributive connection which emitted the last zapping request and commands the filter unit to reject the cells belonging to that connection. Furthermore the DC CTRL unit informs a microprocessor (not shown) through the port µP-port the connection producing the threshold exceeding. The microprocessor in its turn communicates this information to the control unit of the PMU_C module.

While a particular embodiment of the present invention has been shown and described, it should be understood that the present invention is not limited thereto since other embodiments may be made by those skilled in the art without departing from the true spirit and scope thereof. It is thus contemplated that the present invention encompasses any and all such embodiments covered by the following claims.

## Claims

1. System for the control of connections for audio and video distributive and interactive services in a local node, in the ATM technique including:
- a local node in the ATM technique (A_NOD);
- a plurality of customer premises networks, connected to said local node (CPN₁,...,CPN_{N});
- audio and video servers of the interactive type (AUDIO _VIDEO_SERVER_{I}) connected to, said local node (A_NOD);
- audio and video servers of the distributive type (AUDIO _VIDEO_SERVER_{D}) connected to said local node (A_NOD);
- a control and supervision network (CMN),
characterized by the fact that said local node (A_NOD) includes:
- a switching network (ATM-SF) consisting of a first portion of the point-to-point type (PTP_S) suitable to switch the ATM cells belonging to interactive services and of a second multicasting (MC_S) portion suitable to distribute ATM cells belonging to distributive services;
- at least one user's peripheral module (PMU), suitable to connect customer premises networks (CPN) to said switching network (ATM-SF);
- at least one user's peripheral module, for the control of interactive services (PMS_{I}) suitable to connect said audio and video interactive servers (AUDIO_VIDEO_SERVER_{I}) to said first portion (PTP_S) of the switching network (ATM-SF);
- at least one user's peripheral module, for the control of distributive services (PMS_{D}) suitable to connect said audio and video distributive servers (AUDIO_VIDEO_SERVER_{D}) to said second portion (MC_S) of the switching network (ATM-SF).

2. System according to claim 2, characterized by the fact that said local node (AN) includes also one peripheral module at least for the control of trunk lines (PMT) suitable to connect trunk lines to said switching network (ATM-SF).

3. System according to claims 1 and 2, characterized by the fact that said user peripheral modules (PMU) are configured in such a way to control both signals relevant to said interactive services and signals relevant to said distributive services and to this purpose they include means for the processing of ATM signals (S_STAGE_D, ATLD,S_STAGE_U,ATLU) for the performance of signal switching functions at ATM level.

4. System according to claim 3, characterized by the fact that said user peripheral module (PMU) includes:
- an upstream switching stage (S_STAGE_U) with inputs connected (CPN_LINE), through an information flow multiplexing unit of ATM type (MX) and upstream connection units (ATLU) to said Customer Premises Network (CPN) and outputs connected (IS_BUS) to said switching network (ATM-SF) or connected (ZAPPING_BUS) to inputs of a downstream switching stage (S_STAGE_D);
- a downstream switching stage (S_STAGE_D) whose remaining inputs (S_BUS,I_BUS) are connected to said first (PTP_S) and second (MC_S) portion respectively of the switching network (ATM-SF) and whose outputs are connected, through a relevant downstream connection unit (ATLD) to a relevant line termination (LT);
- a control unit (PMU_C) connected to
a) said control and supervision network (CMN) through a bus (cmn_BUS),
b) said connection units (ATLD, ATLU) through a relevant wire (1c),
c) an output (sign_{U}) of said upstream switching stages (S_STAGE_U);
d) an input (sign_{D}) of the switching units (B_{D}) of said downstream switching stage (S_STAGE D).

5. System according to claim 4, characterized by the fact that the outputs of said second portion (MC_S) of the switching network (ATM-SF) reaching (D_BUS) said downstream switching stage (S_STAGE_D), are gathered in groups of v outputs and each group represents the inputs of a cell multicasting unit (MCU) whose outputs z, being z higher than v, are connected at input to a relevant switching modular element (B).

6. System according to claims 4 and 5, characterized by the fact that each cell multicasting unit (MCU) is associated to a relevant multicasting control unit (MCC) receiving at input said outputs (ZAPPING-BUS) of the upstream switching stage (S_STAGE_U).

7. System according to claim 1, characterized by the fact that said second portion (MC_S) of the switching network consists of a passive optical network.

8. System according to claim 1, characterized by the fact that said first portion (PTP_S) of the switching network (ATM-SF) consists of a plurality of switching modular elements.

9. System according to claim 4, characterized by the fact that said downstream connection units (ATLD) include:
- filtering means (FILTER) suitable to
i) detect if a zapping occurred on distributive connections and if this detection is successful the same communicate this event to a distributive connection control block (DC CONTROL);
ii) eliminate cells of distributive connections if the bandwidth required by the user for that connection is not compatible with the available bandwidth;
- spacing memory moans (SPACING MEMORY) connected to the outputs of said filter means (FILTER) and suitable to issue at output the cells reaching their input at a given speed time by time;
- counting and comparing means (SPACING CTRL) suitable to:
i) count cells present in the above mentioned spacing memory means;
ii) compare the result of the count with a preset threshold;
iii) issue the identifier of connections on exceeding of threshold they refer to;
- control means (WTC), suitable to determine the above mentioned issue speed of cells by said spacing memory means;
- control means of distributive connections (DC CTRL) suitable to:
i) receive from said filter means (FILTER) signals in response to each zapping detection:
ii) receive from said count and comparison means (SPACING CTRL) connection identifiers which threshold exceeding refer to;
iii) command the cancellation of cells present in filter means (FILTER) relevant to the connection which identifier has been received by count and comparison means (SPACING CTRL);
iv) send a message containing the identifier of connections which produced exceeding of said threshold to a microprocessor system.

10. System according to claims 4, 5 and 6, characterized by the fact that said cell switching modular elements ATM (B) are of the type including 16 inputs and 16 outputs.

11. Method for the control of connections for audio and video distributive and interactive services in a local node in ATM technique including:
- a local node in ATM (AN) technique;
- a plurality of Customer Premises Network (CPN₁,...,CPN_{N}) connected to said local node (AN);
- audio and video interactive server devices (AUDIO_VIDEO_SERVER_{I}), connected to said local node (AN);
- audio and video distributive server devices (AUDIO-VIDEO_SERVER_{D}), connected to said local node (AN);
- a control and supervision network (CMN),
characterized by the fact to include the following steps:
- to distribute (MC_S) ATM cells available at the output of said distributive servers (AUDIO_VIDEO_SERVER_{D}) and relevant to distributive services with replication of signals at physical level and send the replicated signals to the user peripheral modules (PMU);
- to replicate and switch, inside said user peripheral modules (PMU) said ATM signals and send replicated cells toward said Customer Premises Networks (CPN),
further characterized by the fact to include the additional following steps:
- to switch (PTP_S) ATM cells available at the output of said audio and video interactive servers (AUDIO_VIDEO_SERVER_{I}) and relevant to audio and video interactive type with switching at ATM level of signals and send switched signals to the user peripheral modules (PMU);
- to switch, inside said user peripheral modules (PMU) said ATM signals and address switched signals to said Customer Premises Networks (CPN₁,...,CPN_{N}).

12. Method according to claim 11, characterized by the fact to include, following a request of active connection among connections offered by said distributive servers (AUDIO_VIDEO_SERVER_{D}) by an user among the users of said customer premises Networks, the additional following steps:
- coding inside an ATM cell (zapping cell) said request for connection change;
- sending this ATM cell (zapping cell) toward the user peripheral module (PMU) to which the Customer Premises Network (CPN) emitting the connection request change is connected;
- stopping, inside said user peripheral module (PMU), the switching towards said Customer Premises Network (CPN) of ATM cells corresponding to the active connection preceding said connection change request;
- starting, inside said user peripheral module (PMU), the switching, toward said Customer Premises Network(CPN), of ATM cells corresponding to the connection presently required;
- checking, if the bandwidth of the connection requested by the user is compatible with the bandwidth of the transmission mean interconnecting the Customer Premises Network to the user peripheral module;
- stopping, should the above mentioned check give negative results, switching of ATM cells corresponding to the new connection.

13. Method according to claim 12 characterized by the fact the said check, when the bandwidth required by the user is compatible with the bandwidth of the transmission mean, is made in such a way to assure the service quality of connections underway.

14. Method according to claims 12 and 13, characterized by the fact that said check foresees the following steps:
a) storing in a queue (spacing queue) ATM cells corresponding to the required connection;
b) calculating the difference between the bit rate of the user channel and the sum of the peak speed of connections underway;
c) reading cells stored in the above mentioned spacing queue equal to the result of the calculation mentioned under step b);
d) counting the number of cells present in the above mentioned spacing queue and compare the result of the count with a preset threshold value;
e) sending an alarm signal in response to each threshold exceeding as per point d) to the peripheral module control unit, together with the identifier of the connection which produced this threshold exceeding;
f) switching the stop of sending of additional ATM cells corresponding to the new channel required.

15. Method according to claim 14, characterized by the fact to foresee the additional step of storing stop, inside the spacing queue of cells belonging to the last connection which required the channel change in response to the receipt of said alarm signal.

16. Method according to claim 14, characterized by the fact to foresee the following additional steps:
- marking with a particular identifier (low priority) of cells stored in said spacing queue in response to a channel change request emitted by the user;
- overwriting cells marked with the above mentioned identifier with non marked cells entering the same spacing queue.

17. Method according to claim 15, characterized by the fact to foresee the additional step to restart storing of cells in said spacing queue if after a preset time interval calculated from the emission of the alarm signal no additional cells reach the same connection, or cells with an additional identifier representing the fact that a channel change on that connection took place, arrive.

18. Method according to claim 16, characterize by the fact that said marking with the particular identifier (Low priority) is introduced if the emission of said alarm signal is not recorded at a given time interval.

19. Method according to claim 16, characterized by the fact that said identification with a particular identifier (low priority) is made assigning a particular configuration to the bits of the FRM field foreseen in the ATM cell header.

20. Method according to claim 19, characterized by the fact that said FRM signal is included in the fields not used of the ATM cell.

21. Method according to claim 19, characterized by the fact that said FRM signal is included in particular configurations of the OCI field of the cell format used inside the local node.
